Europäisches Patentamt

(19) European Patent Office

Office européen des brevets

(11) Numéro de publication: **0 026 123
B1**

(12) **FASCICULE DE BREVET EUROPEEN**

(45) Date de publication du fascicule du brevet:
**21.09.83**

(21) Numéro de dépôt: **80401234.2**

(22) Date de dépôt: **28.08.80**

(51) Int. Cl.³: **C 03 C 27/12,** B 32 B 17/10,
C 09 J 3/00, C 08 L 75/04

(54) **Utilisation d'une couche adhésive en matière plastique comme couche intercalaire dans un vitrage feuilleté et vitrages feuilletés.**

(30) Priorité: **03.09.79 FR 7922014**

(43) Date de publication de la demande:
**01.04.81 Bulletin 81/13**

(45) Mention de la délivrance du brevet:
**21.09.83 Bulletin 83/38**

(84) Etats contractants désignés:
**BE DE IT LU NL SE**

(56) Documents cités:
**FR-A-2 061 451
FR-A-2 148 515
FR-A-2 153 037
LU-A-77 675
US-A-3 791 914**

(73) Titulaire: **SAINT-GOBAIN VITRAGE, Les
Miroirs 18, avenue d'Alsace, F-92400 Courbevoie (FR)**

(72) Inventeur: **Kraemling, Franz, Josef Ponten Strasse 91,
D-5100 Aachen (DE)**
Inventeur: **Mueller, Achim, Gierlichsstrasse 14,
D-5120 Herzogenrath (DE)**
Inventeur: **Linden, Ludwig, Josef Strasse 28,
D-5100 Aachen (DE)**
Inventeur: **Raedisch, Helmer, Nizzaallee no 36,
D-5100 Aachen (DE)**

(74) Mandataire: **Eudes, Marcel et al, Saint-Gobain
Recherche 39 Quai Lucien Lefranc, F-93304 Aubervilliers
Cedex (FR)**

Utilisation d'une couche adhésive en matière plastique comme couche intercalaire dans un vitrage
feuilleté, et vitrages feuilletés

L'invention concerne l'utilisation d'une nouvelle couche de matière plastique comme couche intercalaire adhésive dans un vitrage feuilleté. L'invention concerne également un vitrage feuilleté contenant cette couche intercalaire.

On connaît une grande variété de couches intercalaires adhésives pouvant être utilisées dans les vitrages feuilletés. On emploie par exemple le polyvinylbutyral, des polyuréthanes, d'autres polymères ou copolymères tel un copolymère de vinylacétate.

Généralement, le choix de l'intercalaire dépend du type de vitrage et de son utilisation.

Ainsi dans les vitrages automobiles et de bâtiment, on emploie essentiellement le polyvinylbutyral comme intercalaire, ce qui confère audit vitrage des propriétés de sécurité ainsi que des caractéristiques mécaniques déterminées.

Pour des vitrages comprenant des assemblages verre-polycarbonate, il est connu d'utiliser une colle à base de polyuréthane comme décrit dans la publication de la demande de brevet allemand DE-B-1 594 164.

Pour des vitrages insonorisants, il est connu, d'après la publication de la demande de brevet allemand DE-B-1 709 322 d'utiliser un copolymère de vinylacétate comme couche intercalaire de deux feuilles de verre.

Bien que les couches intercalaires connues montrent certaines propriétés intéressantes pour des applications bien définies, elles sont à maints égards non satisfaisantes, d'une part par leur trop grande spécificité d'application et d'autre part dans leur application spécifique elle-même.

Ainsi, dans la demande susdite DE-B-1 594 164, qui utilise une feuille non entièrement polymérisée ayant des propriétés thermoplastiques, formée à partir d'un polyuréthane thermoplastique contenant un excès de groupes NCO, le collage obtenu montre une certaine sensibilité vis-à-vis de la température, notamment l'élasticité de la colle diminue et celle-ci ne peut alors absorber entièrement les efforts de cisaillement dus à la différence des coefficients de dilatation du verre et du polycarbonate, de sorte qu'elle provoque des déformations de l'assemblage. En outre, la faculté de la colle à retenir les petits éclats du vitrage en cas de bris laisse à désirer. En plus, des mélanges stoechiométriques d'isocyanate et de polyols, et plus encore des mélanges contenant un excès de composant isocyanate sont relativement chers.

Il en est de même dans la demande DE-B-1 709 322 décrivant un élément de construction en verre feuilleté insonorisant comprenant une plaque de verre de 6 mm collée sur une autre feuille de verre ou de polycarbonate par une couche de colle formée à partir d'un copolymère vinylacétate ayant de hautes propriétés viscoélastiques; dans ce cas, également, le collage obtenu montre une certaine sensibilité vis-à-vis de la température, avec une diminution de l'élasticité de la colle à basse température.

Et toujours, l'adhésion est insuffisante de sorte qu'en cas de bris du vitrage, les petits éclats ne sont pas retenus.

Un des objets de l'invention est l'utilisation d'une nouvelle couche intercalaire adhésive dans des vitrages feuilletés à applications très diverses.

La couche intercalaire utilisée selon l'invention montre des propriétés d'adhésion qui ne sont pas affectées par de grandes variations de températures. En outre, en cas de bris du vitrage, elle retient collés les éclats de verre.

La couche intercalaire pour un vitrage feuilleté selon l'invention peut absorber entièrement les efforts de cisaillement dus à des différences de coefficients de dilatation des composants du vitrage, par exemple le verre et le polycarbonate.

Un objet de l'invention est de fournir un vitrage feuilleté ayant d'excellentes propriétés d'insonorisation, et cela à faible coût de fabrication.

Conformément à l'invention, on utilise comme couche intercalaire adhésive dans un vitrage feuilleté une couche formée à partir d'un mélange coulable d'un composant polyol et d'un composant isocyanate, le composant polyol étant pris en large excès, le rapport numérique des groupes isocyanates à celui des groupes hydroxyles dans le mélange étant compris entre 0,2 et 0,6, un au moins des composants ayant une fonctionnalité au moins égale à 3, ladite couche étant ensuite mûrie de manière à obtenir sa réticulation.

Le produit de réaction après polymérisation in situ n'est pas un polyuréthane au sens propre du terme, mais en raison du large excès du composant à groupes hydroxyles, plutôt un polyol contenant des groupes polyuréthanes. Ce n'est pas un produit thermoplastique et il présente un ensemble de propriétés qui, pour beaucoup d'usages, le rendent supérieur aux colles connues.

Ces propriétés avantageuses sont notamment:
- une meilleure adhésion à la surface d'un verre de silicate par suite de l'excès en groupes OH,
- une faible viscoélasticité, de sorte que les tensions produites sont plus facilement absorbées,
- une plus grande indépendance des propriétés élastiques vis-à-vis de la température,
- une bonne aptitude du mélange à être coulé,
- une grande faculté de rétention des éclats de verre même très petits après un bris de vitrage,
- une bonne isolation acoustique résultant de la grande perte d'énergie viscoélastique à l'intérieur de la couche intercalaire adhésive,
- une fabrication de la couche intercalaire adhésive à coût réduit.

De préférence, on utilise pour former la couche intercalaire un mélange dans lequel le rapport numérique des groupes isocyanates sur les groupes hydroxyles est compris entre 0,25 et 0,45, ce qui donne un produit mûri ayant un degré de réticulation compris entre 25 et 45%.

Le brevet français 2 061 451 décrit des vitrages feuilletés en verre comportant une couche intercalaire qui est le produit de réaction d'un composé diisocyanate présentant un groupe ester d'acide carboxylique et d'au moins un polyol, le rapport numérique des groupes isocyanates à celui des groupes hydroxyles varie largement et il est compris entre 0,2 et 10. Ce brevet ne décrit pas une couche intercalaire formée à partir d'un composant isocyanate et d'un composant polyol, au moins un de ces composants ayant une fonctionnalité supérieure ou égale à 3, avec un rapport numérique des groupes isocyanates aux groupes hydroxyles compris entre 0,2 et 0,6.

La demande de brevet luxembourgeoise LU-A-77 675 décrit une feuille de matière plastique préformée comprenant une couche solide de polyuréthane thermodurcissable ayant des propriétés d'autocicatrisation et d'antilacération et une couche solide de polyuréthane thermoplastique ayant des propriétés d'adhésion.

Cette demande ne décrit pas une couche intercalaire formée à partir d'un composant isocyanate et d'un composant polyol en utilisant un rapport numérique des groupes isocyanates aux groupes hydroxyles compris entre 0,2 et 0,6.

Dans une forme de réalisation avantageuse de l'invention, comme composant polyol plurifonctionnel, on emploie en particulier un ou des polyesterpolyols ou des polyétherpolyols ayant une masse moléculaire comprise entre 250 et 4000 obtenus par réaction d'eau ou d'alcools plurifonctionnels comme l'éthylèneglycol, le butanol-1,4, la glycérine, le triméthylolpropane, l'hexanetriol, le pentaérithritol, le sorbitol, etc. . . avec des acides dicarboxyliques aliphatiques comme l'acide adipique ou des éthers cycliques comme l'oxyde d'éthylène, l'oxyde de propylène ou le tétrahydrofurane. Comme composant isocyanate, on emploie des isocyanates plurifonctionnels comme l'hexaméthylènediisocyanate, le triméthylhexaméthylènediisocyanate, le m-xylylènediisocyanate, le 4,4'-méthylène-bis(cyclohexylisocyanate), l'isophoronediisocyanate ou leur biuret à trois fonctions isocyanate ou plus.

De préférence, la couche intercalaire est appliquée sous une épaisseur d'au moins 0,5 mm et jusqu'à 12 mm entre les feuilles à coller. L'épaisseur de la couche intercalaire est avantageusement supérieure à 1 mm.

La couche intercalaire adhésive peut être fabriquée in situ en étant versée sur la surface de verre à lier. Il n'est pas nécessaire de fabriquer une feuille à partir du mélange de colle pour la disposer ensuite entre deux feuilles pour l'assemblage par calandrage.

La couche intercalaire adhésive utilisée suivant l'invention répond particulièrement bien aux exigences demandées lorsque la dureté shore est inférieure à 20 et de préférence inférieure à 10.

Les essais de la demanderesse ont montré que les qualités insonorisantes atteintes par un vitrage ayant une couche intercalaire en polyuréthane faiblement réticulée conforme à l'invention sont bien meilleures que celles pouvant être atteintes par un vitrage analogue ayant un intercalaire en polyvinylbutyral.

Quelques exemples de réalisation de vitrages feuilletés insonorisants et/ou comprenant des assemblages verre-polycarbonate, conformes à l'invention sont décrits par la suite.

Exemple 1

On mélange sous pression réduite afin d'éviter la formation de bulles d'air:
- 1850 g d'un polyétherpolyol obtenu par condensation de 1,2-propylèneoxyde avec du 2,2-bis(hydroxyméthyl-1-butanol) ayant une masse moléculaire d'environ 450 et une teneur en radicaux hydroxyles libres d'environ 11,5% (par exemple le produit commercialisé sous l'appellation Desmophen 550 U par la société Bayer AG);
- 0,19 g de dilaurate de dibutylétain;
- 716 g d'un biuret de 1,6-hexaméthylènediisocyanate ayant une teneur en radicaux isocyanates libres d'environ 22% (par exemple le produit commercialisé sous l'appellation Desmodur N/100 par la société Bayer AG).

La masse apte à être coulée est déversée en une couche de 4 mm d'épaisseur sur une feuille de verre de 8 mm d'épaisseur. Une feuille de verre de 4 mm d'épaisseur est placée sur la couche de colle. La colle est mûrie à une température de 313 K (40 °C) durant trois heures et demie avant que la couche ne puisse être écartée de sa position horizontale. Après complet mûrissement, la colle montre un rapport numérique des groupes isocyanates aux groupes hydroxyles d'environ 0,3. La dureté shore est inférieure à 10. Les déformations élastiques et plastiques de la couche de colle restent inchangées dans le domaine de température allant de 256 K à 353 K (−15 à 80 °C).

Pour le vitrage ci-dessus, on a mesuré d'après la méthode DIN 52210 une insonorisation de 38 dB ($R_W$).

A titre de comparaison, un vitrage de structure identique mais utilisant comme couche de colle insonorisante une colle non conforme à l'invention, à savoir une couche dans laquelle le rapport numérique des groupes isocyanates sur les groupes polyols correspond à un degré de réticulation de 80%, possède une insonorisation $R_W$ de 35 dB seulement. Ceci montre que l'augmentation de la réticulation de la colle réduit sensiblement les propriétés d'insonorisation.

Exemple 2

La masse apte à être coulée, préparée suivant l'exemple 1, est déversée sur une feuille de verre de 3 mm d'épaisseur, disposée horizontalement, pour former une couche de 2 mm d'épaisseur. On place ensuite une plaque de polycarbonate de 5 mm d'épaisseur sur la couche de colle, puis à nouveau une couche de colle de 2 mm d'épaisseur. Enfin, une feuille de verre de silicate de 3 mm d'épaisseur est placée ensuite sur cette deuxième couche de colle. La colle est mûrie à une température de 313 K (40 °C) durant trois heures et demie avant que la couche ne puisse être écartée de sa position horizontale. Après complet mûrissement, la couche montre un rapport numérique des groupes isocyanates aux groupes hydroxyles d'environ 30% et une dureté shore inférieure à 10. La dureté shore et les déformations élastiques et plastiques de la couche de colle restent inchangées dans l'intéressant domaine de température allant de 258 K à 353 K ( − 15 à 80 °C).

Un vitrage feuilleté ayant la structure décrite ci-dessus se prête excellemment bien à l'utilisation comme vitrage anti-effraction. Des essais de choc répétés avec la pointe d'un marteau d'une masse de 8 kg montrent que celui-ci ne peut traverser le vitrage feuilleté. Du côté de l'impact, les morceaux de vitrage sont imprimés dans la couche de liaison collante qui retient les éclats, même les plus petits.

## Exemple 3
On mélange sous pression réduite afin d'éviter la formation de bulles d'air:
— 73,9 g d'un polyétherpolyol obtenu par condensation de 1,2-propylène-oxyde avec du 2,2-bis(hydroxyméthyl-1-butanol), ayant une masse moléculaire d'environ 450 et une teneur en radicaux hydroxyles libres d'environ 11,5% (par exemple le produit commercialisé sous l'appellation Desmophen 550 U par la société Bayer AG);
— 0,074 g de dilaurate de dibutylétain;
— 25,3 g d'isophoronediisocyanate ayant une teneur en radicaux isocyanates libres d'environ 37,5% (par exemple le produit IPDI de la société Veba-Chemie). Le mélange montre un rapport numérique des groupes NCO à celui des groupes OH de 0,45 et la colle après polymérisation un degré de réticulation de 45%.

Le mélange est placé à la température ambiante entre deux feuilles de verre puis mûri à une température d'environ 313 K (40 °C). Le vitrage fabriqué montre des propriétés d'insonorisation comparables à celles du vitrage selon l'exemple 1.

## Exemple 4
On fabrique un mélange réactionnel comme décrit dans l'exemple 1.

Le mélange est placé à température ambiante entre une feuille de verre et une feuille de polycarbonate, puis mûri à une température d'environ 313 K (40 °C). La colle montre des propriétés comparables à celles de la colle décrite dans l'exemple 3.

## Exemple 5
On mélange sous pression réduite afin d'éviter la formation de bulles d'air:
— 422,6 g de polytétraméthylène-éther-diol ayant une masse moléculaire d'environ 650 et une teneur en radicaux hydroxyles libres d'environ 5,3% (par exemple le produit commercialisé sous l'appellation Teracol 650 par la société Du Pont);
— 0,042 g de dilaurate de dibutylétain;

— 100 g d'un biuret de 1,6-hexanediisocyanate ayant une teneur en radicaux isocyanates libres d'environ 22% (par exemple le produit commercialisé sous l'appellation Desmodur N/100 par la société Bayer AG).

Le mélange montre un rapport numérique des groupements NCO aux groupements OH de 0,4 et le degré de réticulation de la colle après mûrissement est d'environ 40%.

Le mélange est placé entre une feuille de verre et une feuille de polycarbonate sous forme d'une couche de 2 mm d'épaisseur. La colle est mûrie complètement après 30 minutes à la température ambiante.

## Exemple 6
On mélange sous pression réduite afin d'éviter la formation de bulles d'air:
— 261 g d'un polyéther obtenu par condensation de 1,2,3-trihydroxypropane et de 1,2-propylène-oxyde, ayant une masse moléculaire d'environ 450 et une teneur en radicaux hydroxyles libres d'environ 12% (par exemple le produit commercialisé sous l'appellation Napter G 130 par la société Naphta-Chimie);
— 0,026 g de dilaurate de dibutylétain;
— 100 g d'un biuret de 1,6-hexanediisocyanate ayant une teneur en radicaux isocyanates libres d'environ 23,2% (par exemple le produit commercialisé sous l'appellation Desmodur L 2291 par la société Bayer AG).

Le rapport des groupes NCO sur les groupes OH dans le mélange est de 0,3, ce qui, après mûrissement, procure une colle dont le degré de réticulation est d'environ 30%. Le mélange est placé entre deux feuilles de verre. Le vitrage obtenu montre de bonnes propriétés d'insonorisation.

## Exemple 7
On prépare un mélange comme décrit dans l'exemple 6 et on fabrique un assemblage verre-polycarbonate comme dans les exemples précédents.

## Exemple 8
On fabrique un vitrage selon l'exemple 2, à ceci près que l'on porte sur une feuille de verre de 8 mm d'épaisseur une couche de colle de 2 mm d'épaisseur ayant un degré de réticulation du polyuréthane de 30%, la couche de colle étant ensuite recouverte d'une feuille de polycarbonate de 5 mm d'épaisseur sur laquelle on porte une deuxième couche de colle ayant un degré de réticulation de 30% que l'on recouvre d'une feuille de verre de 4 mm d'épaisseur.

Le mûrissement des couches de colle se fait comme dans l'exemple 2. Le vitrage feuilleté fabriqué montre une insonorisation de $R_w = 40$ dB. L'apport de polycarbonate dans le vitrage feuilleté procure plusieurs avantages, par exemple il réduit le poids du vitrage, il rend possible une diminution de l'épaisseur du vitrage, il augmente la résistance à l'effraction.

Ce vitrage peut être employé comme vitrage anti-effraction.

## Exemple 9

On mélange sous pression réduite afin d'éviter la formation de bulles d'air:

- 280 g d'un polypropyleneglycol ayant une masse moléculaire d'environ 425 et une teneur en radicaux hydroxyles libres d'environ 7,9% (par exemple le produit commercialisé sous l'appellation PPG 425 par la société Union Carbide);
- 0,159 g de dilaurate de dibutylétain;
- 117 g d'un biuret de 1,6-hexanediisocyanate ayant une teneur en radicaux isocyanates libres d'environ 22,2% (par exemple le produit commercialisé sous l'appellation Desmodur N 100 de la société Bayer AG).

Le mélange montre un rapport des groupements isocyanates sur les groupements hydroxyles de 0,48 et le degré de réticulation de la colle après mûrissement est d'environ 48%. Le mélange est placé entre deux feuilles de verre. Le vitrage obtenu montre de bonnes propriétés d'insonorisation.

## Exemple 10

On prépare un mélange comme décrit dans l'exemple 9 et on fabrique un assemblage verre-polycarbonate comme dans les exemples précédents.

## Exemple 11

On mélange sous pression réduite afin d'éviter la formation de bulles d'air, un polyétraméthylène-étherdiol commercialisé sous l'appellation Teracol 650 par la société Du Pont avec un biuret de 1,6-hexanediisocyanate commercialisé sous l'appellation Desmodur L 2291 par la société Bayer, avec un rapport des groupements hydroxyles de 0,52, et en présence de dilaurate de dibutylétain à raison de 0,05% en poids par rapport au poids total du mélange.

Le mélange est ensuite placé entre deux feuilles de verre. Le vitrage obtenu montre de bonnes propriétés d'insonorisation.

## Exemple 12

On prépare un mélange comme décrit dans l'exemple 11 et on fabrique un assemblage verre-polycarbonate comme dans les exemples précédents.

## Exemple 13

Pour fabriquer un vitrage pare-balles qui du côté opposé au tir présente une couche de protection contre les éclats et qui évite la libération de ces éclats, on prend un vitrage blindé classique formé d'un verre de 3 mm, d'une couche de polyvinylbutyral de 1,5 mm, d'un verre de 8 mm, et sur ce dernier verre on place une couche de colle, suivant un des exemples précédents, de 2 mm d'épaisseur, puis une plaque de polycarbonate de 2 mm d'épaisseur.

Le cas échéant, cette plaque de polycarbonate peut être recouverte sur sa face libre d'une couche ayant des propriétés d'autocicatrisation à la rayure comme décrit dans les publications de brevets allemands DE-AS 2 629 779 et DE-OS 2 729 229.

## Exemple 14

On fabrique un vitrage insonorisant en prenant deux vitrages feuilletés, formés chacun de deux feuilles de verre de 3 mm d'épaisseur et d'une couche de polyvinylbutyral de 0,76 mm d'épaisseur et on les colle ensemble à l'aide d'une couche de colle préparée suivant un des exemples précédents et de 2 mm d'épaisseur.

D'autres réalisations de vitrages feuilletés utilisant la couche intercalaire selon l'invention peuvent être utilisées pour réaliser d'autres types de vitrages feuilletés, notamment des assemblages verre-acétobutyrate de cellulose.

## Exemple 15

On fabrique un premier vitrage feuilleté à partir d'une feuille de verre de 6 mm d'épaisseur, d'une couche de colle de 2 mm d'épaisseur préparée suivant un des exemples précédents, et une autre feuille de verre de 4 mm d'épaisseur, collées ensemble par une couche de 2 mm de la colle précédente. Ces deux vitrages feuilletés sont combinés avec un cadre de distance pour former un vitrage isolant ayant un espace de 15 à 24 mm entre les deux vitrages feuilletés.

Ce vitrage montre une insonorisation extrêmement élevée de $R_w = 50$ à 53 dB.

Selon un autre mode de réalisation de l'invention, le vitrage feuilleté peut comprendre deux feuilles de polycarbonate liées à une feuille de verre par deux couches adhésives.

## Revendications

1. Utilisation d'une couche adhésive comme couche intercalaire dans un vitrage feuilleté, caractérisée en ce que la couche est formée à partir d'un mélange coulable d'un composant polyol plurifonctionnel et d'un composant isocyanate plurifonctionnel, le composant polyol étant pris en large excès, le rapport numérique des groupes isocyanates à celui des groupes hydroxyles étant compris entre 0,2 et 0,6, un au moins des composants ayant une fonctionnalité au moins égale à 3, puis la couche est mûrie de manière à obtenir sa réticulation.

2. Utilisation selon la revendication 1, caractérisée en ce que le rapport numérique des composants est compris entre 0,25 et 0,45.

3. Utilisation selon une des revendications 1 et 2, caractérisée en ce que le composant polyol est formé à partir d'un ou plusieurs polyols plurifonctionnels, en particulier des polyesterpolyols ou des polyétherpolyols ayant une masse moléculaire comprise entre 250 et 4000.

4. Utilisation selon une des revendications 1 à 3, caractérisée en ce que la couche adhésive est formée à partir d'un mélange de polyétherpolyols obtenus par condensation de 1,2-propylèneoxyde avec du 2,2-bis(hydroxyméthyl-1-butanol) ou du 1,2,3-trihydroxypropane, ayant une masse moléculaire d'environ 450 et une teneur en radicaux hydroxyles libres d'environ 10,5 à 12% et d'un biuret de 1,6-hexanediisocyanate ayant une teneur en radicaux NCO libres d'environ 21 à 24%.

5. Vitrage feuilleté caractérisé en ce qu'il comprend une couche intercalaire adhésive telle que définie dans les revendications 1 à 4.

6. Vitrage feuilleté selon la revendication 5, caractérisé en ce que l'épaisseur de la couche intercalaire est d'au moins 0,5 mm.

7. Vitrage feuilleté selon une des revendications 5 et 6, caractérisé en ce qu'il comprend au moins une feuille de verre et au moins une feuille de polycarbonate reliées entre elles par la couche intercalaire ayant au moins 2 mm d'épaisseur, et une dureté shore inférieure à 20.

8. Vitrage feuilleté selon la revendication 7, caractérisé en ce qu'il comprend un verre de 3 mm, une couche de polyvinylbutyral de 1,5 mm, un verre de 8 mm recouvert d'une couche de colle de 2 mm d'épaisseur, elle-même recouverte d'une plaque de polycarbonate de 2 mm d'épaisseur.

9. Vitrage selon une des revendications 5 et 6, caractérisé en ce que la couche adhésive lie deux feuilles de verre, et l'épaisseur de la couche adhésive est comprise entre 1 et 12 mm.

10. Vitrage selon la revendication 7, caractérisé en ce qu'il comprend deux feuilles de verre liées à une feuille de polycarbonate par deux couches adhésives ou deux feuilles de polycarbonate liées à une feuille de verre par deux couches adhésives.

11. Vitrage selon une des revendications 5 et 6, caractérisé en ce que la couche adhésive lie deux vitrages feuilletés formés chacun de deux feuilles de verre et d'un intercalaire en polyvinylbutyral.

**Claims**

1. Use of an adhesive layer as an intermediate layer in a laminated pane, characterised in that the layer is formed from a castable mixture of a polyfunctional polyol component and a polyfunctional isocyanate component, the polyol component being present in a large excess, the numerical ratio of the isocyanate groups to the hydroxyl groups being from 0.2 to 0.6, at least one of the components having a functionality of at least 3, and the layer is then hardened so that it is crosslinked.

2. Use according to claim 1, characterised in that the numerical ratio of the components is from 0.25 to 0.45.

3. Use according to one of claims 1 to 2, characterised in that the polyol component is formed from one or more polyfunctional polyols, in particular polyester polyols or polyether polyols having a molecular weight from 250 to 4000.

4. Use according to one of claims 1 to 3, characterised in that the adhesive layer is formed from a mixture of polyether polyols obtained by condensation of 1,2-propylene oxide with 2,2-bis(hydroxymethyl-1-butanol) or 1,2,3-trihydroxypropane, having a molecular weight of about 450 and a content of free hydroxy radicals of about 10.5 to 12% and a biuret of 1,6-hexanediisocyanate having a content of free NCO radicals of about 21 to 24%.

5. Laminated pane characterised in that it comprises an adhesive intermediate layer such as defined in claims 1–4.

6. Laminated pane according to claim 5, characterised in that the thickness of the intermediate layer is at least 0.5 mm.

7. Laminated pane according to one of claims 5 and 6, characterised in that it comprises at least one glass sheet and at least one sheet of polycarbonate connected to each other by an intermediate layer having a thickness of at least 2 mm thickness, and a Shore hardness less than 20.

8. Laminated pane according to claim 7, characterised in that it comprises a glass of 3 mm thickness, a polyvinylbutyral layer of 1.5 mm thickness, and a glass of 8 mm thickness covered with an adhesive layer of 2 mm thickness, itself covered with a plate of polycarbonate of 2 mm thickness.

9. Pane according to one of claims 5 and 6, characterised in that the adhesive layer is connected to two glass sheets and the thickness of the adhesive layer is from 1 to 12 mm.

10. Pane according to claim 7, characterised in that it comprises two glass sheets connected to a sheet of polycarbonate by two adhesive layers or two polycarbonate sheets connected to a glass sheet by two adhesive layers.

11. Pane according to one of claims 5 and 6, characterised in that the adhesive layer connects two laminated panes of which both are formed of two glass sheets and a polyvinylbutyral intermediate.

**Patentansprüche**

1. Verwendung einer Haftschicht als Zwischenschicht bei einer Mehrschichtenverglasung, dadurch gekennzeichnet, dass die Zwischenschicht aus einer giessfähigen Mischung aus einem mehrfunktionellen Polyol und einem mehrfunktionellen Isocyanat besteht, wobei der Polyolanteil in grossem Überschuss vorhanden ist, das zahlenmässige Verhältnis der Isocyanatgruppen zu den Hydroxylgruppen zwischen 0,2 und 0,6 liegt und wenigstens einer der Bestandteile eine Wertigkeit von wenigstens 3 aufweist, und dass man die Zwischenschicht anschliessend zur Erzielung ihrer Vernetzung reifen lässt.

2. Verwendung nach Anspruch 1, dadurch gekennzeichnet, dass das zahlenmässige Verhältnis der Bestandteile zwischen 0,25 und 0,45 liegt.

3. Verwendung nach einem der Ansprüche 1 oder 2, dadurch gekennzeichnet, dass der Polyolbestandteil aus einem oder mehreren mehrfunktionellen Polyolen besteht, insbesondere Polyesterpolyolen oder Polyätherpolyolen mit einem Molekulargewicht zwischen 250 und 2000.

4. Verwendung nach einem der Ansprüche 1 bis 3, dadurch gekennzeichnet, dass die Haftschicht aus einer Mischung von Polyätherpolyolen besteht, hergestellt durch Kondensation von 1,2-Propylenoxid mit 2,2-bis-(Hydroximethyl-1-butanol) oder mit 1,2,3-Trihydroxypropan mit einem Molekulargewicht von ca. 450 und einem Gehalt an freien Hydroxylradikalen von ca. 10,5 bis 12% und mit einem Biuret des 1,6-Hexandiisocyanats mit einem Gehalt von freiem radikalischen NCO von ca. 21 bis 24%.

5. Schichtenverglasung, dadurch gekennzeichnet, dass sie eine Zwischenhaftschicht gemäss den Ansprüchen 1 bis 4 aufweist.

6. Schichtenverglasung nach Anspruch 5, gekennzeichnet dadurch, dass die Dicke der Zwischenschicht wenigstens 0,5 mm beträgt.

7. Schichtenverglasung nach einem der Ansprüche 5 und 6, dadurch gekennzeichnet, dass sie wenigstens eine Glasscheibe und wenigstens eine Polycarbonatscheibe aufweist, die miteinander durch eine Zwischenschicht von wenigstens 2 mm Dicke und einer Shorehärte unter 20 verbunden sind.

8. Schichtenverglasung nach Anspruch 7, dadurch gekennzeichnet, dass sie ein Glas von 3 mm, eine Polyvinylbutyralschicht von 1,5 mm und ein Glas von 8 mm aufweist, abgedeckt mit einer Klebeschicht von 2 mm Dicke, die selbst mit einer Polycarbonatplatte von 2 mm Dicke beschichtet ist.

9. Verglasung nach einem der Ansprüche 5 und 6, dadurch gekennzeichnet, dass die Haftschicht zwei Glasscheiben verbindet und die Dicke der Haftschicht zwischen 1 und 12 mm liegt.

10. Verglasung nach Anspruch 7, dadurch gekennzeichnet, dass sie aus zwei Glasscheiben, die mit einer Polycarbonatscheibe durch zwei Haftschichten verbunden sind, oder aus zwei Polycarbonatscheiben besteht, die mit einer Glasscheibe durch zwei Haftschichten verbunden sind.

11. Verglasung nach einem der Ansprüche 5 und 6, dadurch gekennzeichnet, dass die Haftschicht zwei Mehrschichtenverglasungen verbindet, die jede aus zwei Glasscheiben und einer Zwischenschicht aus Polyvinylbutyral bestehen.